# EUROPÄISCHE PATENTANMELDUNG

(11) **EP 2 740 809 A1**
(43) Veröffentlichungstag der Anmeldung: **11.06.2014**
(21) Anmeldenummer: 12195908.4
(22) Anmeldetag: 06.12.2012
(51) Int. Cl.: C22B 3/04, C22B 23/02

(54) **Anordnung und Verfahren zum Eintragen von Wärme in eine Ansammlung von Erzen und/oder Sanden mittels elektromagnetischer Induktion**

(71) Anmelder: Siemens Aktiengesellschaft, 80333 München (DE); Wintershall Holding GmbH, 34119 Kassel (DE)
(72) Erfinder: Die Erfindernennung liegt noch nicht vor

(57) **Zusammenfassung**

Die Erfindung betrifft eine Anordnung und ein Installationsverfahren und ein Betriebsverfahren zum Eintragen von Wärme in eine Ansammlung (3) von gebrochenen Erzen und/oder von metallischen Sanden zur Gewinnung von in der Ansammlung (3) enthaltenen Wertstoffen, wobei eine Einrichtung (6) zur Benetzung der Ansammlung (3) mit einer, insbesondere mit einer Elektrolytlösung angereicherten, Flüssigkeit zur Auslaugung der enthaltenen Wertstoffe vorgesehen ist. Weiterhin ist ein elektrischer Leiter (4) zumindest teilweise von der Ansammlung (3) umgeben oder in Bezug auf die Ansammlung (3) örtlich benachbart angeordnet. Der Leiter (4) weist dabei zumindest einen Leiter-Abschnitt (2) auf, der derart ausgebildet ist, dass im Betrieb ein elektromagnetisches Feld auf den zum Leiter-Abschnitt (2) benachbarten Bereich (8) der Ansammlung (3) mittels elektromagnetischer Induktion einwirkt, so dass in diesem Bereich (8) metallische Verbindungen und/oder Elektrolyte angeregt werden und dadurch eine Temperaturerhöhung im benachbarten Bereich (8) der Ansammlung (3) bewirkt wird.

## Beschreibung

Die Erfindung betrifft im Umfeld der Hydrometallurgie oder Bergbauindustrie Anordnung sowie Verfahren zum Eintragen von Wärme in eine vorzugsweise zu einem Haufen geschichteten Ansammlung von gebrochenen Erzen und/oder von metallischen Sanden zur Gewinnung von in der Ansammlung enthaltenen Wertstoffen, insbesondere zur Auslaugung von Basismetallen aus der Ansammlung.

Es ist bereits bekannt, dass zur Gewinnung von Metallen aus zu einem Haufen geschichtetem Erzmaterial eine sogenannte Haufenlaugung angewendet werden kann. Auf diese Weise kann z.B. Gold, Kupfer, Nickel, Uran, Silber und andere Metalle vielfach verhältnismäßig wirtschaftlich gewonnen werden. Bei dieser Haufenlaugung wird das Ausgangs-Erzmaterial falls erforderlich gebrochen bzw. zerkleinert, woraufhin dieses zerkleinerte Produkt zu einen Haufen geformt und/oder auf eine Halde abgelegt wird. Zur Durchführung dieser Haufenlaugung wird ein Laugungsmittel bzw. eine Laugungsflüssigkeit über den Haufen bzw. die Halde verteilt, wodurch das in diesen Erzpartikeln enthaltene Metall gelöst werden soll. Das erhaltene produzierte Fluid wird in Drainageleitungen am Grund der Halde aus der Halde herausgeleitet. In weiteren Verfahrensschritten werden die Wertstoffe aus dem produzierten Drainage-Fluid mit weiteren Verfahren heraus extrahiert.

Verschiedene bekannte Verfahren besitzen jeweils ihre spezifischen Eigenschaften bei der Gewinnung von Metallen aus Erzmaterialien. Allgemein ist jedoch ein höheres bzw. schnelleres Ausbringen von Metallen aus dem Erzmaterial wünschenswert.

In verschiedenen Verfahren wird die Lauge über ein System von Rohrleitungen und Tropfverteilern auf die Oberfläche der Erzschicht des Haufens aufgegeben. Die Lauge durchfließt den Haufen und löst die darin enthaltenen Metalle. Weitgehend bedingt durch die Gravitation fließt sie bis an den Grund und an der Basis durch ein Drainagesystem. Die mittels Drainagesystem gesammelte Lauge kann wieder verrieselt werden bis die Metallkonzentration ausreicht, um das Metall durch Aufbereitung zu extrahieren.

Ein Beispiel für die zuvor erläuterte Haufenlaugung lässt sich dem US-Patent US 4,960,461 entnehmen. Daraus ist auch bekannt, die Zerkleinerung von Bunt- oder Edelmetall enthaltendem Erzmaterial in einer Art Walzenmühle durchzuführen. Dabei kann dem Ausgangs-Erzmaterial zuvor ein Bindemittel beigemischt werden, wodurch Feinanteile aus dem Zerkleinerungsprozess an gröbere Teilchen gebunden werden, um den Erzhaufen für die Laugungsflüssigkeit durchlässig zu machen. Das aus der Zerkleinerungsmühle kommende Zerkleinerungsprodukt wird bei diesem bekannten Verfahren ohne weitere Behandlung direkt dem Haufen oder der Halde aufgegeben.

Bei Entwicklung von Erzlagerstätten in kalten Regionen unter Verwendung der genannten Prinzipien der Haufenauslaugung ist gewünscht, auch bei niedrigen Temperaturen die Haufenauslaugung durchführen zu können. Eine Temperaturerhöhung zur Verlängerung der Auslaugungsperiode und für eine Geschwindigkeitssteigerung der Auslaugung bei niedrigen Außentemperaturen kann teilweise durch Wärmedämmung oder durch Erwärmung erzielt werden, insbesondere durch Wärmedämmung oder/und Erwärmung des Erzhaufens, sowie durch Wärmedämmung oder/und Erwärmung der Laugelösung.

Bei Erwärmung der Laugelösung wird allerdings üblicherweise viel Energie verloren während des Transportes der warmen Laugenlösung zum Erzhaufen. Die erwärmte Lösung wird auch schnell im Erzhaufen bei der Perkolation - dem Durchsickern des Elektrolytes, des Wassers bzw. der Lauge - abgekühlt. Ein gleichmäßiges Temperaturfeld ist in diesem Fall auch kaum zu bilden.

Es ist Aufgabe der vorliegenden Erfindung, eine Anordnung zum Eintragen von Wärme in einen Haufen anzugeben, bei der im Betrieb im Haufen großräumige Zonen mit weitgehend homogener Temperatur ermöglicht werden und/oder sich eine stabile Temperatur im Inneren des Haufen einstellt. Weiter ist es Aufgabe den auftretenden Wärmeverlust in der Anordnung zu minimieren. Weiterhin ist es eine Aufgabe der Erfindung, ein Verfahren zur Installation einer derartigen Anordnung und ein Verfahren zum Betrieb einer derartigen Anordnung anzugeben.

Die Aufgabe wird erfindungsgemäß durch die Merkmale der unabhängigen Patentansprüche gelöst. Vorteilhafte Weiterbildungen und Ausgestaltungen der Erfindung sind in den Unteransprüchen angegeben.

Die Erfindung betrifft eine Anordnung zum Eintragen von Wärme in eine Ansammlung - insbesondere ein Haufen - von gebrochenen Erzen und/oder von metallischen Sanden zur Gewinnung von in der Ansammlung enthaltenen Wertstoffen. Es ist eine Einrichtung zur Benetzung der Ansammlung - vorzugsweise mittels Berieselung der Ansammlung - mit einer, insbesondere mit einer Elektrolytlösung angereicherten, Flüssigkeit zur Auslaugung der enthaltenen Wertstoffe vorgesehen. Dies kann beispielsweise durch ein System an Rohrleitungen und Tropfverteilern erfolgen. Weiterhin umfasst die Anordnung mindestens einen elektrischen Leiter, wobei dieser Leiter zumindest teilweise von der Ansammlung umgeben oder in Bezug auf die Ansammlung örtlich benachbart angeordnet ist. Der Leiter weist zumindest einen Leiter-Abschnitt auf, der derart ausgebildet ist, dass im Betrieb ein elektromagnetisches Feld auf den zum Leiter-Abschnitt benachbarten Bereich der Ansammlung mittels elektromagnetischer Induktion einwirkt, so dass in diesem Bereich metallische Verbindungen und/oder Elektrolyte angeregt werden und dadurch eine Temperaturerhöhung im benachbarten Bereich der Ansammlung bewirkt wird.

Es werden insbesondere mittels der elektromagnetischen Induktion freie Elektronen oder freie Ionen angeregt. Die genannten Elektrolyte der Ansammlung sind insbesondere durch die Zuführung der Elektrolytlösung in der Ansammlung vorhanden.

Der Leiter wird gemäß seiner Wirkung auch als Induktor bezeichnet. Entsprechend einer bevorzugten Ausgestaltung wird er auch als Leiterschleife bezeichnet, da bevorzugt beide Enden des Leiters zur selben Energiequelle geführt werden.

Vorzugsweise durchdringt der zumindest eine Leiter-Abschnitt die Anordnung. "Örtlich benachbart" bedeutet z.B. dass der Leiter-Abschnitt oberflächlich auf der Ansammlung gelegt wird.

Die Anordnung ist vorteilhaft, weil ein oder mehrere Leiter in der Ansammlung als Induktionsschleifen verlegt werden können und im Betrieb somit die Temperatur der Ansammlung erhöht, stabilisiert und/oder ausgeglichen werden kann. Dadurch kann eine Erzhaldenauslaugung und ein Metallausbringen in ihrer Effizienz erhöht werden.

Weiterhin kann eine Temperaturerhöhung im Inneren der Ansammlung bewirkt werden. Weiterhin kann ein weitgehend homogenes Temperaturfeld im Inneren der Ansammlung erzeugt werden. Dieses als "induktives Erwärmen" zu bezeichnende Vorgehen ermöglicht eine Bildung von großräumlichen Zonen mit erhöhter sowie stabiler Temperatur tief in der Ansammlung. Oberflächliche Wärmeverluste werden minimiert.

Weiterhin ist die benötigte Energie zum Ansteuern des Leiters im Vergleich zu alternativen Erwärmungsverfahren gering.

In einer bevorzugten Ausgestaltung der Erfindung kann der Leiter - und somit auch der Leiter-Abschnitt - mit Wechselstrom mit einer derartigen Frequenz bestromt werden, dass der Leiter einen maximalen Strom entsprechend seiner konstruierten nominalen Stromtragfähigkeit erreicht. Darunter ist zu verstehen, dass ein Leiter aufgrund seiner Materialien und seines Aufbaus so ausgelegt wird, dass für ihn ein gemäß dieser Auslegung definierter maximaler Strom im Betrieb vorliegt.

Dieser angelegte Wechselstrom und der maximale für den Leiter vorgesehene Strom ermöglicht wiederum, eine mit diesem Strom korrespondierende elektromagnetische Feldstärke in der den Leiter umgebenden Ansammlung zu erreichen. Die Feldstärke erreicht bei dem genannten maximalen Strom ebenfalls ihren Maximalwert. Dieser Maximalwert einer Feldstärke generiert im Folgenden eine maximale bzw. an die vorliegenden äußeren Gegebenheiten optimierte Temperaturerhöhung in der Ansammlung, wobei die Temperaturerhöhung aufgrund der Feldstärke durch in der Ansammlung induzierte Wirbelströme bewirkt wird.

Dabei ist insbesondere eine bloße maximale Temperaturerhöhung nicht in jedem Fall das Ziel. Die Temperaturerhöhung sollte unterhalb einer Schwelle bleiben, ab der eine Verdampfung der in der Ansammlung vorliegenden Flüssigkeit erfolgt. Es erfolgt also eine an die Gegebenheiten optimierte Temperaturerhöhung.

Darüber hinaus kann die Eindringtiefe des elektromagnetischen Feldes - d.h. die Wirksamkeit des Feldes in Entfernung zum Leiter - konfiguriert werden, wobei hierzu mehrere Parameter ineinander spielen. Die Eindringtiefe des Feldes ist nämlich abhängig von Stromstärke und Frequenz im Leiter, sowie der elektrischen Leitfähigkeit in der Ansammlung. Die elektrische Leitfähigkeit kann wiederum über den Ionengehalt in der Lauge manipuliert werden, während die Stromstärke und die Frequenz über einen Umrichter zur Ansteuerung des Leiters gesteuert werden können.

Die vorliegende Anordnung ermöglicht es im Betrieb, dass die zugeführte Elektrolytlösung nach Durchdringen der Ansammlung als Auslaugungslösung - inklusive ausgeschwemmter oder angereicherter chemischer Elemente und Verbindungen - an der Basis gesammelt und weggeleitet werden kann, insbesondere zur Weiterverarbeitung dieser angereicherten Auslaugungslösung oder zum erneuten Zuführen zur Ansammlung.

In einer bevorzugten Ausgestaltung kann der Leiter seriell kompensiert ausgebildet sein. Dies bedeutet insbesondere, dass der Leiter aus einer Vielzahl von aus Widerstand (R), Spule (L), und Kondensator (C) bestehenden RLC-Elementen aufgebaut sein kann. Beim Leiter können eine Vielzahl von resonant abgestimmten RLC-Schwingkreisen als wirksame Antenne für das elektromagnetische Feld wirken.

Der elektrische Leiter ist gemäß einer bevorzugten Ausführungsform als geschlossene ununterbrochene Schleife - Leiter-Schleife - ausgebildet, wobei Hin- und Rückleiter an einen Frequenzgenerator angeschlossen werden können, der den elektrischen Leiter mit einer dafür vorgesehenen Frequenz bestromt. Zumindest ein Teil der Schleife enthält bevorzugterweise die vorstehend genannten RLC-Elemente, um das elektromagnetische Feld zu erzeugen.

Vorzugsweise kann ein erster Teil des Leiter-Abschnitts weitgehend parallel zu einem zweiten Teil des Leiter-Abschnitts ausgerichtet sein. Die Leiter-Abschnitte sind quasi-parallel. Der erste Teil und der zweite Teil können außerhalb der Ansammlung zu einer Leiterschleife verbunden sein. Weiterhin können der erste Teil und der zweite Teil weitgehend parallel zu einer Erstreckungsachse der Ansammlung angeordnet sein. Insbesondere bilden der erste Teil zusammen mit dem zweiten Teil und ein weiteres Verbindungsstück ein zusammenhängendes Kabel. Das Verbindungsstück kann insbesondere so ausgebildet sein, dass es weitgehend kein elektromagnetisches Feld bewirkt. Außerdem kann das Verbindungsstück vorzugsweise außerhalb oder in Randbereichen der Ansammlung angeordnet sein, so dass eine Verlegung des Leiters in einen bereits bestehenden Haufen durch zwei einfache geradlinige Bohrungen für den ersten und den zweiten Teil ermöglicht wird.

Der Aufbau der Anordnung kann auch so erfolgen, dass der Leiter auf eine erste Schicht der Ansammlung oberflächlich verlegt wird. In einem weiteren Schritt kann eine zweite Schicht der Ansammlung die erste Schicht und den Leiter bedecken. Auf diese Weise kann auf Bohrungen in der Ansammlung verzichtet werden.

In einer Ausgestaltung der Erfindung kann eine als den Leiter erregende Frequenzquelle ein an den Leiter angeschlossener, insbesondere im Leistungsbereich 10kW bis 10 MW betriebener, Frequenzumrichter verwendet werden. Der Frequenzumrichter kann insbesondere einen Reihenresonanzschwingkreis oder alternativ einen Parallelresonanzschwingkreis mit dem Leiter bilden.

Gemäß einer vorteilhaften Ausgestaltung können Steuerelektroden vorgesehen sein, die die Ausbreitung des elektromagnetischen Feldes beeinflussen. Vorzugsweise können zur Steuerung des elektromagnetisches Feldes elektrisch leitfähige Steuerelektroden auf oder an oder in der Ansammlung verlegt werden, um eine Streuung des elektromagnetischen Feldes zu steuern, insbesondere um die Streuung des elektromagnetischen Feldes außerhalb der Ansammlung einzuschränken.

Beispielsweise kann durch Einbringung eines metallischen Leiters als Steuerelektrode in eine Halde oder auf den Rand der Halde eine gezielte Beeinflussung des elektromagnetischen Feldes durchgeführt wird, insbesondere um so die Wirksamkeit des Feldes innerhalb der Halde zu verbessern.

Die Steuerelektrode ist ein vom Leiter getrenntes Bauteil, das auch nicht aktiv bestromt wird. Es kann schlichtweg billiger Baustahl sein, über den das Feld "eingesammelt" wird oder zumindest beeinflusst wird. D.h. vorzugsweise schließen sich die Feldlinien nicht in der Luft außerhalb der Ansammlung sondern werden durch die Steuerelektroden "eingesammelt", so dass sie innerhalb der Ansammlung geleitet werden können. Über das einwirkende Feld wird auch in der Steuerelektrode Wirbelstrom erzeugt, der dann wiederum mittels thermischer Wärmeleitung auf die Ansammlung wirkt.

Die Ansammlung kann in einer bevorzugten Ausgestaltung eine thermische Barriere an der Oberfläche der Ansammlung aufweisen, so dass nur wenig Wärme austreten kann. Dies kann durch eine wärmedämmende Folie oder ein wäremdämmendes Material erfolgen. Die Abdeckung kann die Ansammlung vollständig oder nur teilweise abdecken.

Weiterhin kann die Ansammlung an der Oberfläche der Ansammlung eine Barriere für ein elektromagnetisches Feld aufweisen, z.B. durch eine ein Feld beeinflussende Folie.

Die Ansammlung wird vorzugsweise in Form von Strossen aufgehäuft. Eine Strosse ist ein Begriff aus dem Bergbau. Eine derartige Ansammlung enthält Absätze. Der erste Leiter-Abschnitt und/oder die Steuerelektrode kann bevorzugt entlang der Strossen verlegt werden oder senkrecht dazu.

Vorzugsweise kann der Leiter in dem zumindest einen Leiter-Abschnitt in nichtmetallische Rohre verlegt werden. Als Material ist insbesondere Polyethylen und/oder Hochtemperatur-Polyethylen und/oder Polyvynilchlorid denkbar. Weiterhin können die Rohre aus Glasfaser verstärktem Kunststoff bestehen, vorzugsweise aus Glasfaser verstärktem Kunststoff in Verbindung mit Epoxidharz.

Die Rohre sind bevorzugt nichtmetallisch, um das Feld nicht zu stören. Die Rohre schützen darüber hinaus den Leiter. Beim Verlegen können im Übrigen zuerst lediglich die Rohre verlegt und erst später der Leiter eingezogen werden.

Für Extraktion des in der Ansammlung gebundenen Materials, kann mindestens eine Drainageleitung am Grund der Ansammlung vorgesehen sein. Diese Drainageleitung kann eine geschlitzte Mantelfläche für die Aufnahme eines Flüssigkeitsgemisches aufweisen. Hierbei kann die Drainageleitung aus ähnlichen Gründen wie bei den Rohren angegeben, nichtmetallisch ausgeführt ist sein. Alternativ zu den Drainageleitungen oder auch zusätzlich zur Unterstützung der Drainagewirkung kann auch ein Grund der Ansammlung eine zu einem Rand der Ansammlung geneigte Sohle aufweisen, so dass das extrahierte Flüssigkeitsgemisch weggeleitet werden kann.

Im Bezug auf die Ausrichtung des Leiters und der Ansammlung sind verschiedene Konfigurationen denkbar. Beispielsweise kann der Leiter-Abschnitt in der Ansammlung oder auf der Oberfläche der Ansammlung verlegt werden. Der erste Leiter-Abschnitt kann dabei vorwiegend in der oberen Schicht der Ansammlung verlegt werden. Der Leiter-Abschnitt kann weiter auf einer Kante der Ansammlung frei verlegt werden, wobei eine durch den Leiter-Abschnitt und einem weiteren Leiter-Abschnitt gebildete Leiter-Schleife in einer Fläche, die parallel einer Haufenbasis der Ansammlung ausgerichtet ist, platziert wird.

Wie bereits erwähnt kann die Ansammlung - also ein Erzhaufen oder eine Tafelhalde - strossenförmig gebildet sein. Die Leiter-Schleife kann frei auf den Strossen platziert werden. Weiterhin kann wenigstens ein Teil der Leiter-Schleife - auch Induktionsschleife genannt - auf der Strosse platziert werden und anderer Teil der Induktionsschleife innerhalb der Ansammlung platziert werden.

Die Leiter-Schleife kann vorwiegend in den vertikalen Flächen der Ansammlung platziert werden, wobei der Leiter-Abschnitt und ein weiterer Leiter-Abschnitt in einer Basisschicht oder oberhalb der Basisschicht der Ansammlung verlegt werden kann.

Rückführende oder zuführende elektrischen Leitung des Leiters können frei auf der Oberfläche der Ansammlung verlegt werden.

Weiterhin können mehrere Leiter-Schleifen vorwiegend in horizontalen Flächen oder in Flächen, die parallel der Basis der Ansammlung liegen, verlegt werden.

Außerdem können die Leiter-Schleifen mindestens in zwei parallelen Ebenen platziert werden.

Zu fördernde Wertstoffe sind zum Beispiel Nickel (Ni) und/oder Kobalt (Co), welche in einem Erz, das zu einer Ansammlung angehäuft wird, gebunden sein können. Auch die Förderung anderer Metalle ist denkbar. Insbesondere ist weiterhin eine Extraktion von Gold, Kupfer, Uran und Silber möglich.

Bisher wurde im Wesentlichen nur die erfindungsgemäße Anordnung diskutiert. Ebenfalls Gegenstand der Erfindung ist das Bereitstellen, also Installieren oder Errichten so einer Anordnung. Das erfindungsgemäße Verfahren zum Errichten einer derartigen Anordnung mit dem Ziel, eine Anordnung zum Eintragen von Wärme in eine Ansammlung von gebrochenen Erzen und/oder von metallischen Sanden zur Gewinnung von in der Ansammlung enthaltenen Wertstoffen bereitzustellen, umfasst folgende Verfahrensschritte:
- Bilden einer Ansammlung von gebrochenen Erzen und/oder von metallischen Sanden;
- Bereitstellen einer Einrichtung zum Benetzen der Ansammlung mit einer, insbesondere mit einer Elektrolytlösung angereicherten, Flüssigkeit zur Auslaugung der enthaltenen Wertstoffe;
- Installieren eines elektrischen Leiters in der Ansammlung oder benachbart zur Ansammlung während des Bildens oder zeitlich nach dem Bilden der Ansammlung, so dass der Leiter zumindest teilweise von der Ansammlung umgeben oder in Bezug auf die Ansammlung örtlich benachbart angeordnet ist.

Der zu installierende Leiter weist dabei zumindest einen Leiter-Abschnitt auf, der derart ausgebildet ist, dass im Betrieb ein elektromagnetisches Feld auf den zum Leiter-Abschnitt benachbarten Bereich der Ansammlung mittels elektromagnetischer Induktion einwirkt, so dass in diesem Bereich metallische Verbindungen und/oder Elektrolyte angeregt werden und dadurch eine Temperaturerhöhung im benachbarten Bereich der Ansammlung bewirkt wird.

Gemäß den bereits vorstehend genannten möglichen Installationsmöglichkeiten des Leiters, kann im Rahmen des Installierens des elektrischen Leiters in der Ansammlung ein Teil des Leiter-Abschnitts vorwiegend in der oberen Schicht der Ansammlung verlegt werden. Alternativ kann ein Teil des Leiter-Abschnitts weitgehend parallel zu einem weiteren Teil des Leiter-Abschnitts ausgerichtet wird, wobei die beiden Teile vertikal in oder an der Ansammlung angeordnet sind. Darüber hinaus kann ein Teil des Leiter-Abschnitts weitgehend parallel zu einem weiteren Teil des Leiter-Abschnitts ausgerichtet wird, wobei wiederum die beiden Teile horizontal in oder an der Ansammlung angeordnet sind. Als weitere Ausgestaltung kann ein Teil des Leiter-Abschnitts weitgehend parallel zu einem weiteren Teil des Leiter-Abschnitts ausgerichtet wird, wobei die beiden Teile wiederum parallel zu einer Sohle der Ansammlung angeordnet sind.

Bezüglich dieser Konfigurationen ist es gleichwertig, ob nun ein Teil des Leiter-Abschnitts mit einem weiteren Teil desselben Leiter-Abschnitts in Relation zueinander gebracht werden oder ob ein erster Leiter-Abschnitt mit einem zweiten Leiter-Abschnitt betrachtet wird. In beiden Fällen soll es sich um Teile einer gemeinsamen Leiter-Schleife handeln, die direkt hintereinander angrenzen oder durch einen weiteren Abschnitt voneinander getrennt sind, wobei der weitere Abschnitt vorzugsweise kein oder nur ein geringes Feld abgibt.

Weiterhin kann im Rahmen des Installierens des elektrischen Leiters benachbart zur Ansammlung ein Teil des Leiter-Abschnitts auf einer Kante der Ansammlung oberflächlich verlegt werden, wobei insbesondere der Leiter-Abschnitt parallel zu einer Sohle der Ansammlung ausgerichtet wird.

Weiterhin kann ein Teil des Leiter-Abschnitts auf einer Strosse einer strossenförmig gebildeten Ansammlung oberflächlich verlegt werden.

Darüber hinaus kann ein Teil des Leiter-Abschnitts in an einer Oberfläche der Ansammlung geformte Rinnen verlegt werden.

Rückführende und zuführende elektrischen Leitungen des Leiters können vorzugsweise vorwiegend parallel zu den großen oder kleinen horizontalen Achsen der Ansammlung verlegt werden.

Beim Verfahren zum Errichten der Anordnung kann beim Bilden der Ansammlung - insbesondere im Zuge des Aufschüttens der Ansammlung - in der Ansammlung mindestens ein Rohr platziert werden. Das Installieren des elektrischen Leiters kann dann mittels Einführen des Leiters in das Rohr erfolgen. Die elektrischen Leitungen für die induktive Beheizung der Ansammlung werden somit gleichzeitig mit dem Errichten der Ansammlung verlegt. Das Installieren des elektrischen Leiters kann allerdings auch nach dem Bilden der Ansammlung erfolgen, indem ein Rohr durch Bohren durch die Ansammlung mittels einem Bohrgestänge und anschließendem Einziehen des Rohrs beim Herausziehen des Bohrgestänges in der Ansammlung platziert wird.

Beim Errichten der Ansammlung kann das Erstreckungsverhältnis der Ansammlung so gewählt werden, dass die Lage der Leiter-Schleifen im Verhältnis des Aufbaus der Ansammlung so gewählt ist, dass die Eindringtiefe des elektromagnetischen Feldes jeder Leiter-Schleife in jede Richtung optimal ausgenutzt werden kann. Insbesondere kann vorgesehen sein, dass die Ansammlung vollständig unter Einwirkung des Feldes steht. Alternativ und/oder zusätzlich kann beachtet werden, dass sich Felder benachbarter Leiterschleifen nicht gegenseitig negativ beeinflussen, z.B. durch Beschränkung der jeweiligen Eindringtiefe.

Weiterhin kann die Ansammlung wenigstens mit einer Erzschicht, die eine erhöhte elektrische Leitfähigkeit aufweist, errichtet werden. Vorzugsweise kann die Leiter-Schleife in dieser Schicht platziert werden.

Die Erfindung betrifft weiterhin auch ein Betriebsverfahren für die vorstehend beschriebene Anordnung. In dem Betriebsverfahren ist als erster - möglicherweise zeitlich vorgelagerter - Schritt vorgsehen, dass eine Ansammlung von gebrochenen Erzen und/oder von metallischen Sanden gebildet wird. Weiterhin wird die Ansammlung mit einer, insbesondere mit einer Elektrolytlösung angereicherten, Flüssigkeit zur Auslaugung der enthaltenen Wertstoffen benetzt. Gleichzeitig oder anschließend zum Benetzen der Ansammlung wird ein mindestens einen Leiter-Abschnitt aufweisender elektrischer Leiter in der Ansammlung oder benachbart zur Ansammlung betrieben, so dass in diesem Betrieb ein elektromagnetisches Feld auf den zum Leiter-Abschnitt benachbarten Bereich der Ansammlung mittels elektromagnetischer Induktion einwirkt, so dass in diesem Bereich metallische Verbindungen und/oder Elektrolyte angeregt werden und dadurch eine Temperaturerhöhung im benachbarten Bereich der Ansammlung bewirkt wird.

Unter "benachbarter Bereich der Ansammlung" ist eine Region innerhalb der Ansammlung zu verstehen, die sich im Umfeld des Leiter-Abschnitts befindet.

Die Reihenfolge der Bestromung des Leiters und der Benetzung der Ansammlung kann allerdings auch umgekehrt ablaufen. Es bestehen somit beispielsweise die Varianten, dass die Ansammlung während des Betriebs des Leiters mit Elektrolytlösungen berieselt wird oder dass der Leiters nur nach vollständigem Benetzen der Ansammlung eingeschaltet wird.

Vorzugsweise kann der Leiter mit Wechselstrom mit einer derartigen Frequenz bestromt werden, dass sich für das elektromagnetische Feld eine Frequenz im Bereich von 1khz bis 500kHz einstellt. Alternativ kann ein Frequenzband von 500kHz bis 300MHz eingestellt werden. Außerdem kann auch ein Frequenzband von 300MHz bis 3000MHz einstellbar sein.

Denkbar sind auch beliebige Frequenzbänder im Bereich von 1 kHz bis 3000MHz, abhängig von den verwendeten Umrichtern.

Aufgrund dieses elektromagnetischen Feldes ergibt sich der Vorteil, dass die Ansammlung induktiv erhitzt wird. Dabei kann ein Betrieb insbesondere so erfolgen, dass vorwiegend ein Erzhaufenkern bzw. Haldenkern induktiv erhitzt wird.

Als Flüssigkeit können insbesondere Laugelösungen verwendet werden. Vorzugsweise können dies wässrige Lösungen von Schwefelsäure, Schwefelsäure mit Oxidanten, Stickstoffsäure, Salzsäure sein. Für das Laugen können auch Alkali - beispielsweise Hydroxidnatrium, Karbonatnatrium, Hydroxidammonium - und Salze - z.B. Eisensulfat, Kupferchlorid, Eisenchlorid, Natriumcyianid - beigefügt werden.

Vorzugsweise kann der Flüssigkeit eine mikrobakterielle Nährlösung vor dem Benetzen hinzugegeben werden. Auf diese Weise erfolgt ein sogenanntes Bio-Leaching. Mit Einsatz dieser Technologie können beispielsweise bevorzugt Bunt- und Edelmetalle aus der Ansammlung gewonnen werden. Eine mikrobiologische Haufenauslaugung mittels Bio-Leaching kann insbesondere bei besonders stabilen Temperaturen in der Ansammlung effizient sein, wie dies durch das vorliegende Betriebsverfahren gewährleistet wird.

Weiterhin können die Menge der Berieselung und/oder die Bestromung des Leiters so eingestellt werden, dass die Temperatur in der Ansammlung typischerweise unterhalb einer Verdampfungstemperatur von z. B. 100°C gehalten wird, um die elektrische Leitfähigkeit zu erhalten.

Weiterhin kann die Berieselung - falls nötig - auch als Kühlmedium für die Ansammlung dienen, um so in der gesamten Ansammlung in einem Temperaturbereich unterhalb der Verdampfungstemperatur zu bleiben.

Vorzugsweise werden die Berieselung und/oder die Bestromung des Leiters derart gesteuert, dass die Temperatur innerhalb der Ansammlung in einem Temperaturbereich zwischen 40°C und 80°C gehalten wird, um insbesondere eine optimale mikrobakterielle Entwicklung zu ermöglichen.

Weiterhin kann die Flüssigkeit derart für das Benetzen bereitgestellt werden, dass eine Zusammensetzung der Flüssigkeit in einem eine elektrische Leitfähigkeit der Benetzungsflüssigkeit beeinflussenden konfigurierbaren Mengenverhältnis erfolgt und/oder die Flüssigkeit in einer konfigurierbaren Menge bereitgestellt wird. Zusätzlich oder alternativ kann die Flüssigkeit derart für das Benetzen bereitgestellt werden, dass der elektrische Leiter derart angesteuert wird, dass eine Betriebsfrequenz und/oder eine Betriebsstromstärke des Leiters konfigurierbar ist. Diese genannte(n) Konfiguration(en) können durch ein Kontrollsystem erfolgen, so dass ein Temperatureintrag in die Ansammlung maximiert oder an einen Zielwert angenähert wird und/oder so dass eine gemessene Temperatur in der Ansammlung mittels Regelung innerhalb eines vorgegebenen Temperaturbandes gehalten wird oder an eine Zieltemperatur angenähert wird.

Vorzugsweise kann eine induktive Beheizung mittels des Leiters nur bei Unterschreiten einer Schwelle von einer Umgebungstemperatur eingeschaltet werden.

Eine Temperaturmessung innerhalb der Ansammlung kann vorzugsweise mit fiberoptischen Sensoren erfolgen.

Weiterhin ist es möglich, die elektrische Leitfähigkeit in der Ansammlung und/oder den produzierten Massenfluss aus der Ansammlung zu messen. Die gemessenen Werte können wiederum dem Kontrollsystem zur Auswertung zugeführt werden.

Darüber hinaus kann die elektrische Leitfähigkeit des Materials in der Ansammlung aus der einbringbaren Leistung abgeleitet werden, um so ein Kriterium für die Einstellung der elektrischen Leitfähigkeit des Elektrolyts zu erhalten.

Vorzugsweise kann der elektrische Leiter in einem Resonanzpunkt des Leiters betrieben werden. Im Resonanzpunkt ergibt sich ein minimaler elektrischer komplexer Widerstand, der einen maximalen Stromfluss durch den Leiter ermöglicht. Regelparameter für das Kontrollsystem, um die Betriebsfrequenz in der Nähe des Resonanzpunktes zu halten sind dabei insbesondere die Stromstärke durch den Leiter und die elektrische Leitfähigkeit der Flüssigkeit (d.h. Lauge oder Säure bzw. sauren Lösung).

Bezüglich der Erfindung ist unter dem Ausdruck "Eintragen von Wärme" insbesondere ein Einbringen von Wärme bzw. das Erzielen einer Temperaturerhöhung zu verstehen, so dass sich eine höhere Temperatur innerhalb der Ansammlung einstellt.

Die zu erzielende Temperaturerhöhung ergibt sich weiterhin vorzugsweise dadurch, dass sich in elektrisch leitfähigen Komponenten der Ansammlung aufgrund des elektromagnetisches Feldes Wirbelströme mittels Induktion ausbilden, welche daraufhin joulsche Wärme erzeugen, die eine Temperaturerhöhung bewirken.

Unter "benachbartem" Bereich der Ansammlung ist das direkt umgebende Material um den elektrischen Leiter zu verstehen oder auch das angehäufte Material mit einem Abstand zum elektrischen Leiter, sofern in dem Abstand noch das elektromagnetisches Feld des Leiters wirkt.

Erfindungsgemäß wird ein elektrischer Leiter eingesetzt, den im Betrieb zielgerichtet ein elektromagnetisches Feld umgibt, so dass sich mittels elektromagnetischer Induktion ein umgebender Bereich erwärmt. Hierunter sind allerdings keine parasitären Effekte zu verstehen, die möglicherweise bei vielen elektrischen Leitern im Betrieb auftreten.

Unter der elektromagnetischen Induktion sind insbesondere kein Widerstandsheizen (bzw. resistives Heizen) oder Mikrowellen-Heizen zu verstehen. Allerdings könnten zusätzlich zur Erfindung spezifische Einrichtungen zum derartigen Heizen eingesetzt werden.

Die vorliegende Erfindung und deren Weiterbildungen werden nachfolgend im Rahmen eines Ausführungsbeispiels an Hand von Figuren näher erläutert.

Dabei zeigen in schematischer Darstellung
- Figur 1 -: eine schematische Darstellung einer Tafelhalde in Draufsicht und in Seitenansicht mit vertikal ausgerichteten Leiter-Schleifen,
- Figur 2 -: eine schematische Darstellung einer Tafelhalde in Draufsicht und in Seitenansicht mit einer horizontal ausgerichteten Leiter-Schleife,
- Figur 3 -: eine schematische Darstellung einer strossenförmigen Tafelhalde in Draufsicht und in Seitenansicht mit horizontal ausgerichteten Leiter-Schleifen,
- Figur 4 -: eine schematische Darstellung einer strossenförmigen Tafelhalde in Seitenansicht mit Leiter-Schleifen in verschiedenen horizontalen Ebenen,
- Figur 5 -: eine schematische Darstellung eines Haufens mit enthaltenen Steuerelektroden zur Beeinflussung des elektromagnetischen Feldes,
- Figur 6 -: eine schematische Darstellung eines Haufenabschnitts und einer Leiterschleife,
- Figur 7 -: eine perspektivische Darstellung einer in Schutzrohren verlegten Leiter-Schleife zusammen mit in der Tafelhalde verlegten Steuerelektroden.

Sich in den Figuren entsprechende Teile sind jeweils mit denselben Bezugszeichen versehen.

Eine Erzförderung kann Untertage oder Obertage mittels Bohrlöchern, die mit Sprengstoff gefüllt und anschließend gezündet werden, durchgeführt werden.

Das gewonnene Erz kann anschließend zu einer Zerkleinerungsanlage transportiert werden. Das hochgradige Erz kann direkt zur Verarbeitungsanlage transportiert werden, das niedriggradige Erz kann auf Halde gelagert werden. Die höhergradigen Erze werden auf eine gewünschte Größe zerkleinert, mit Zement und/oder Kalk versetzt um einen gewünschten pH-Wert (ph: "potentia Hydrogenii" als Maß für den sauren oder basischen Charakter einer wässrigen Lösung) zu erreichen, eventuell pelletiert und anschließend zur Laugung auf Erzhaufen gebracht.

Als Erzmaterial für das Haufenlaugen können insbesondere armen Erze oder Abraummaterial (Tagebau) verwendet werden.

Das Errichten eines Erzhaufens - der Halde - als erfindungsgemäße Ansammlung wird mit dem Aufbau einer Basisschicht begonnen. Die Basisschicht wird auf einem festen Boden errichtet und mit Sammelrohren oder mit Sammelrinnen für den späteren Abtransport der durchsickernden Lauge versehen.

Die Basis kann auf der von Mutterboden beräumten Fläche aufgebaut werden. Auf dieser Fläche wird z.B. eine Tonschicht aufgebracht. Auf die Oberfläche dieser gleichmäßig aufgebrachten und verdichteten Schicht kann eine hochdichte Polyethylen-Folie aufgelegt werden. Zum Schutz vor mechanischer Zerstörung kann auf die Folie zunächst eine mehrere Dezimeter dicke Schicht feingebrochenen Erzes oder Sandes aufgebracht werden. Auf dieser Schicht können dann in Abständen von z.B. 5-15 m perforierte Drainagerohre verlegt werden. Die oberste Schicht der Basis kann z.B. aus sortiertem Gestein gebildet werden und kann 300-800 mm dick sein. Diese schützt das gesamte Drainagesystem vor der dynamischen Auflast, die beim Aufbau der Haufen entsteht.

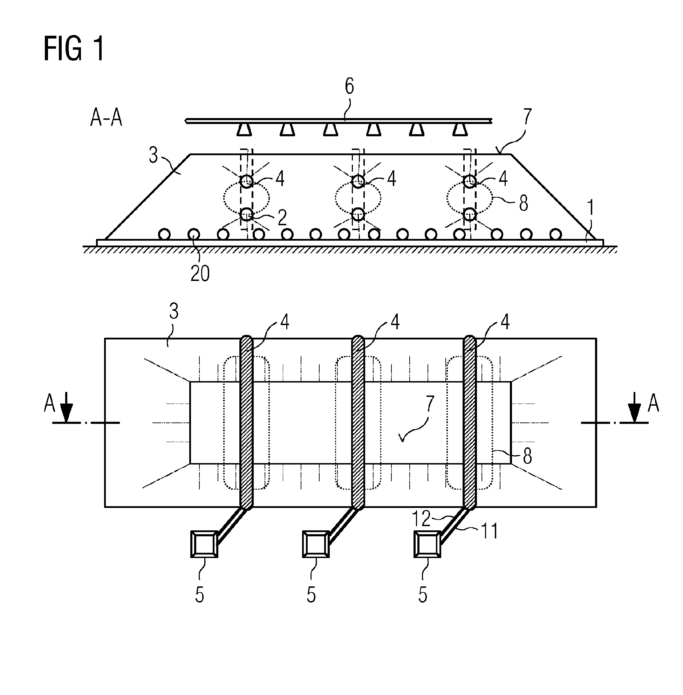

Bezugnehmend auf den Aufbau gemäß Fig.1, ist gemäß der vorstehenden Erläuterung eine Basisschicht 1 angelegt worden.

Dabei ist in Fig.1 einmal eine Draufsicht auf eine erfindungsgemäße Anordnung dargestellt und weiterhin zusätzlich ein Schnitt durch eine vertikale Ebene A-A.

Nach dem Aufbau der Basisschicht 1 werden in Abständen von 5 bis 15 m perforierte Drainagerohre 20 als Drainageleitung frei auf der Basisschicht 1 verlegt.

Das weitere Errichten der Halde bzw. des Erzhaufens 3 in der Halde als erfindungsgemäße Ansammlung kann mit Hilfe von Radladern mit Schaufeln und mobilen Brechanlagen stattfinden. Das Erzbrechen kann mehrstufig sein. Das gebrochene Erz kann über ein System von Förderbändern zur Halde - den späteren Laugungsflächen - gebracht werden. Oft wird das gebrochene Erz agglomeriert.

Während dem Aufschütten des Erzes zum Erzhaufen 3 wird eine Induktionsschleife 4 als erfindungsgemäßer Leiter in den Erzhaufen verlegt. Im vorliegenden Beispiel werden drei Induktionsschleifen 4 in den Erzhaufen 3 in drei parallelen vertikalen (fiktiven) Ebenen platziert.

Währen dem Aufbringen des Erzes werden geradlinige elektrische Leitungsabschnitte 2 als erfindungsgemäße Leiter-Abschnitte frei auf der Basisschicht 1 verlegt. Die Länge des gesamten Leiters ist wesentlich größer als die Breite der Basisschicht 1. Die Länge jedes Leitungsabschnittes 2 ist kürzer als die Länge des Perimeters des vertikalen Querschnittes des Erzhaufens nach seinem Vollerrichten. Die auf die Basisschicht 1 parallel zueinander aufgelegten Leitungsabschnitte 2 werden teilweise mit gebrochenem Erz beim weiteren Errichten des Haufens 3 eingeschüttet. Die Enden der Induktionsschleifen 4 bleiben vorerst frei auf dem Gelände liegen.

Nach dem Vollerrichten des Erzhaufens 3 - z.B. unter Einsatz von Schaufelradladern und/oder mobilen Förderbändern - werden die freiliegenden Enden der Induktionsschleifen 4 auf der Erzhaufenoberfläche verlegt. Diese Enden werden an einen Hochfrequenzgenerator 5 - beispielsweise in Form eines Frequenzumrichters - angeschlossen.

Die spezifische Anordnung zum induktiven Heizen des Erzhaufens 3, wie sie in Fig. 1 dargestellt ist, ist nur eine mögliche Variante. Die Anzahl der Induktionsschleifen 4 hängt von der Länge des Erzhaufens 3 ab bzw. auch von der zeitlichen Sequenz der Errichtung.

Weiterhin können auch zuerst lediglich Leerrohre verlegt werden, in denen dann später die Induktionsschleife 4 verlegt werden kann. In diesem Fall können die Rohre für die Leitungsabschnitte 2 zum späteren induktiven Beheizen des Erzmaterials gleichzeitig mit dem Errichten des Erzhaufens 3 oder der Halde verlegt werden.

Die Länge der Tafelhalde bzw. des Erzhaufens 3 kann hunderte Meter groß sein und die Länge der Leitungsabschnitte 2 entspricht dem Aspektverhältnis des Erzhaufens 3. Die Halde kann eine Tafelform haben. Die geometrischen Parameter der Halden können sehr unterschiedlich sein. Die Höhen von Tafelhalden können variieren, beispielsweise zwischen 5 und 50 Meter.

In Fig. 1 ist der vollständige Aufbau einer Anordnung zur induktiven Beheizung einer Ansammlung dargestellt. Diese Anordnung kann eine Lange über einige 100 m haben. Im Erzhaufen 3 oder/und auf der Oberfläche des Erzhaufens 3 verlegte elektrische Leitungen bilden die Leiterschleife 4, wobei der Hinleiter und Rückleiter als Leitungsabschnitte 2 übereinander, vorzugsweise quasiparallel, also in demselben Abstand zueinander, geführt sind und am Ende über den Hochfrequenzgenerator 5 miteinander verbunden sind und über diesen angesteuert werden.

Die Leitungsabschnitte 2 sind derart ausgebildet, dass sie im Betrieb ein elektromagnetisches Feld erzeugen, dass sich in der Umgebung der Leitungsabschnitte 2 aufbaut. Mittels elektromagnetischer Induktion können somit in diesem Bereich Elektronen und Ionen angeregt werden, z.B. in vorhandenen metallischen Verbindungen und/oder in zugeführten oder vorhandenen Elektrolyten. Dadurch ergibt sich eine Temperaturerhöhung im zum Leitungsabschnitt 2 benachbarten Bereich der Ansammlung.

Neben den zwei ein Feld bewirkenden parallelen Leitungsabschnitten 2 wird die Induktionsschleife 4 über einen gekrümmten Verbindungsabschnitt geschlossen. Dieser Verbindungsabschnitt kann beispielweise weitgehend der Form eines Halbkreises entsprechen. Dieser Verbindungsabschnitt kann ein metallischer Leiter sein, der genauso wie die parallelen Leitungsabschnitten 2 ein Feld erzeugt. Alternativ kann er als bloßes leitendes Verbindungsstück ausgebildet sein, ohne dass er im Betrieb ein elektomagnetisches Feld generiert.

Gemäß Fig.1 ist weiterhin eine Einrichtung bzw. ein System zur Berieselung des aufgehäuften Erzes - also der Ansammlung - vorgesehen.

Nachdem das Erz auf dem Erzhaufen 3 gelagert ist, wird es mit einer Laugelösung behandelt, welche das enthaltene Metall aus dem Erz herauslöst. Um das Erzmaterial mit Lauge zu berieseln, wird eine Berieselungsanlage 6 als erfindungsgemäße Einrichtung zur Benetzung aufgebaut. Diese Anlage erlaubt ein gleichmäßiges Verteilen der Laugelösung auf der oberen Fläche 7 des Erzhaufens 3.

Eine vollständige Laugebenetzung des Erzhaufens 3 inklusive vollständiger Durchdringung des Erzhaufens 3 kann nach einigen Tagen nach Beginn der Berieselung erreicht werden. Dies wird durch die Flussraten der Laugelösung im Basisbereich des Erzhaufens 3 kontrolliert.

Nach dem Stabilisieren der Zuflussraten der Laugelösung wird durch die Induktionsschleifen 4 der elektrische Strom geleitet. Es wird ein Mittelfrequenzstrom angewendet. Um die Leitungsabschnitte 2 wird ein elektromagnetisches Mittelfrequenzfeld gebildet. Da der Erzhaufen 3 durch die Berieselung an elektrischer Leitfähigkeit gewonnen hat, werden zunehmend elektrische Wirbelströme im Erdhaufen ausgebildet. Diese induzierten Wirbelströme wirken wiederum als Wärmequellen.

Da der Erzhaufen 3 durch die Lauge unterschiedlich benetzt wird und sich weiterhin auch ein Durchfluss der Lauge durch den permeablen Erzhaufen 3 ausbildet, wird es lokale Zonen 8 höherer oder niedriger Temperatur geben. Diese Temperatur ist über den Umrichter und/oder über die Laugezuführung regelbar und soll 100°C nicht übersteigen, um eine Verdampfung der Laugelösung zu verhindern. Die durchsickernde Lauge nimmt einen Teil der Wärme auf und transportiert sie darüber hinaus weiter. Durch die konduktive und konvektive Wärmeübertragung verteilt sich die Wärme in dem Erzhaufen 3 relativ gleichmäßig. Dies ist abhängig von den thermischen Eigenschaften des Erzhaufens, wie thermische Leitfähigkeit des Gesteins und der spezifischen Wärmekapazität.

Da sich die lokalen Zonen 8 mit erhöhter Temperatur in der Tiefe im Inneren des Erzhaufens 3 bilden, sind auch die Wärmeverluste aufgrund Abstrahlung über die Oberfläche des Erzhaufens 3 minimal. Diese Technologie kann somit auch im Winter effizient eingesetzt werden z.B. in nördlichen kalten Regionen, die besonders reich nach Metallerzen sind. Die in der Tiefe des Erzhaufens 3 generierte Wärme erlaubt eine wesentliche Steigerung der Ausbeute (des sogenannten Recovery Factors), ganzjährige Metallproduktion und bei Bedarf die problemlose Verwendung von mikrobiologischen Laugeverfahren.

Bei Steigerung der Temperatur um 10°C erhöht sich die Geschwindigkeit der meisten chemischen Reaktionen um zwei bis vier Mal. Es liegen Schätzungen für eine spezifische Lagerstätte vor, dass bei Steigerung der Laugetemperatur bis auf 36°C, die Geschwindigkeit der Metallauslaugung des armen Sulfiderzes dieser Lagerstätte um fünf bis sieben Mal steigt.

Die gesättigte Lösung wird am Boden der Laugungshaufen in Drainagerohren 20 gesammelt und in speziellen Behältern gefasst. Das in der Lösung enthaltene Metall kann anschließend z.B. mittels Elektrolyse gewonnen werden.

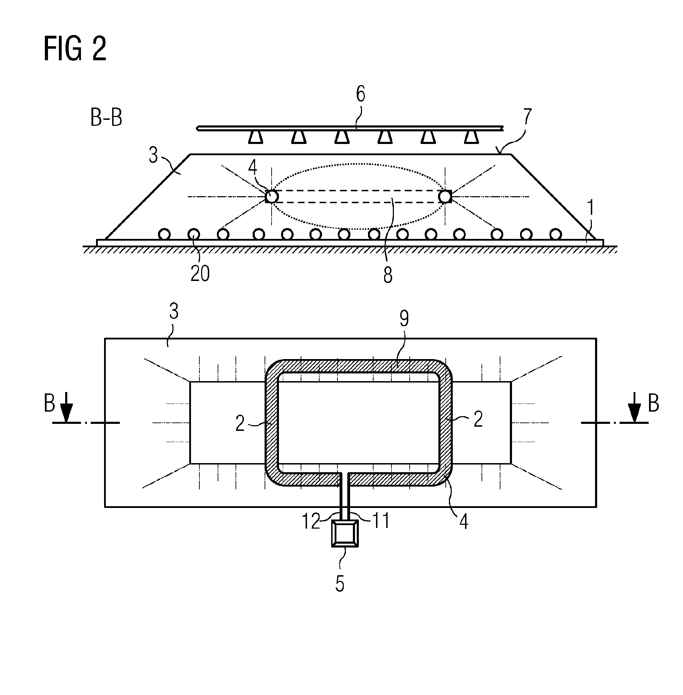

In Fig. 2 ist eine andere mögliche Ausführung einer Ausgestaltung der Erfindung dargestellt. Dabei ist einmal eine Draufsicht auf eine Ansammlung dargestellt und weiterhin zusätzlich ein Schnitt durch eine vertikale Ebene B-B.

Die Induktionsschleife 4 ist in diesem Fall in einer horizontalen fiktiven Ebene mittig in im Erzhaufen 3 platziert. In diesem Fall können beispielsweise Rohre - Leerrohre zur Aufnahme von Abschnitten der Induktionsschleife - für die Induktionsschleife 4 mit dem Errichten der Tafelhalde 3 aufgebaut. Die Induktionsschleife 4 wird nach Errichten des Erzhaufens in die nichtmetallischen Leerrohre eingezogen. Alternativ kann die Induktionsschleife 4 wieder direkt in dem Erzhaufen 3 im Zuge des Errichtens des Erzhaufens 3 platziert werden. Die Rohre oder die Induktionsschleife 4 kann auch nachträglich, z.B. durch eine Bohrung, in den Erzhaufen 3 eingebracht werden.

Die Induktionsschleife 4 ist erneut an den Hochfrequenzgenerator 5 angeschlossen. Nach der Laugebenetzung der oberflächlichen Erzschicht des Erzhaufens 3 über die Berieselungsanlage 6, wird die Induktionsschleife 4 über den Hochfrequenzgenerator 5 eingeschaltet und bestromt. Die Lauge passiert beim Beginn der Versickerung durch den Erzhaufen 3 die lokale Zone 8 im Wirkungskreis des elektromagnetischen Feldes und wird erwärmt. Damit wird Wärme im Inneren des Erzhaufens erzeugt und auch Wärme in die Tiefe der Erzhaufens 3 transportiert.

In Fig. 2 ist lediglich eine Leiterschleife 4 dargestellt. Nach einer anderen Ausführungsvariante werden mehr als eine Induktionsschleife 4 in den Erzhaufen 3 parallel zueinander und beabstandet zueinander platziert.

Die Leiterschleife 4 umfasst erneut zwei Leitungsabschnitte 2, die ein elektromagnetisches Feld erzeugen und innerhalb des Erzhaufens 3 verlaufen. Ein Verbindungsstück 9 verbindet die beiden Leitungsabschnitte 2. Dieses Verbindungsstück 9 kann außerhalb des Erzhaufens 3, insbesondere auf der Oberfläche liegend, angeordnet sein. Alternativ kann das Verbindungsstück 9 ebenfalls innerhalb des Erzhaufens 3 verlaufen. Letztgenannte Variante ist insbesondere vorteilhaft, wenn das Verbindungsstück 9 ebenfalls im Betrieb ein elektromagnetisches Feld abgibt.

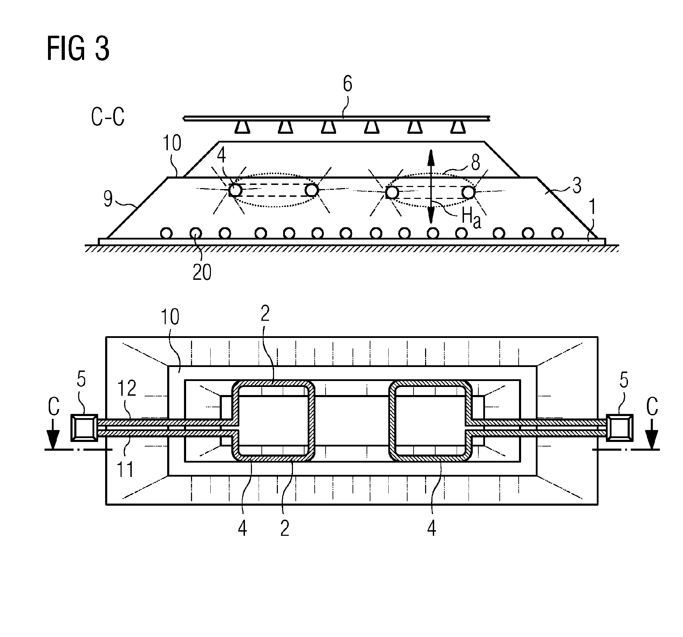

Anhand Fig. 3 ist eine weitere mögliche Ausführung einer Ausgestaltung der Erfindung veranschaulicht. Dabei ist erneut einmal eine Draufsicht auf eine Ansammlung dargestellt und weiterhin zusätzlich ein Schnitt durch eine vertikale Ebene C-C.

Der Erzhaufen 3 wird als Tafelhalde in diesem Fall mindestens mit einer Strosse 10 errichtet. Die Induktionsschleife 4 wird nach dem Errichten der Erzhaufens 3 auf der Strosse 10 oder darunter platziert. Dies ermöglicht es, eine nächste geschichtete Halde darüber aufzubauen. Gemäß Fig. 3 befinden sich an einer Strosse 10 zwei Induktionsschleifen 4 und somit zwei Heizkreise, wobei gemäß der Figur die Strosse 10 und die darüberliegende weitere Halde durch das erzeugte elektromagnetische Feld durchdrungen werden. Die Leitungen der Induktionsschleifen 4 befinden sich in horizontaler Ebene im Erzhaufen 3. Diese Anordnung ist besonders vorteilhaft, wenn die Abmessungen des Erzhaufens 3 groß sind. Typische Abstände zwischen den Hin- und Rückleitern - also den Leitungsabschnitten 2 -, die die Induktionsschleife 4 bilden, sind fünf bis 60 m bei einem Aussendurchmesser der Leiter von fünf bis 15 cm. Die Anzahl der Strossen 10 kann mehr als eine sein. Auf jeder Strosse kann wenigstens eine Induktionsschleife 4 verlegt werden. Wenn die Halde 3 relativ hoch ist, werden mehrere Strossen 10 gebildet. Um die Halde gleichmäßig zu erwärmen, ist die Höhe der Strossen 10 vorzugsweise nicht großer als die Höhe der aktiven Zone, auf die das elektromagnetische Feld wirkt.

Im Laufe der Errichtung des Erzhaufens 3 können erneut Leerrohre für die später einzuziehenden Leiter 11 und 12 verlegt und von einem Hochfrequenzgenerator 5 , der in einem externen Gehäuse untergebracht sein kann, mit elektrischer Leistung versorgt. Der Hochfrequenzgenerator bildet mit einer jeweiligen Induktionsleiterschleife 4 einen Schwingkreis, entweder als Reihenresonanzkreis oder als Parallelresonanzkreis ausgeführt.

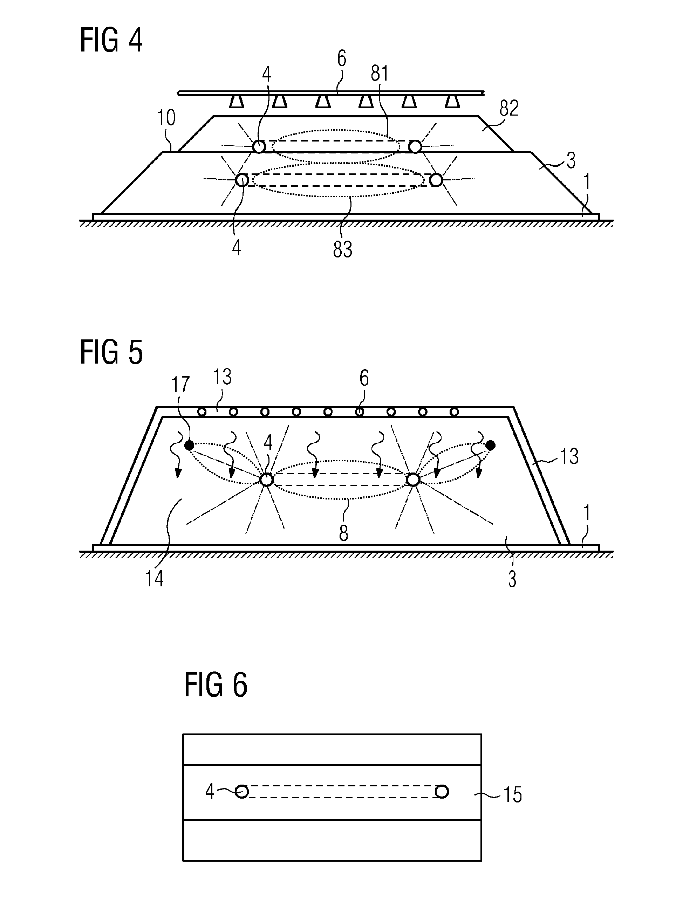

In Fig.4 ist eine weitere mögliche Anordnung der Induktionsschleifen 4 im Erzhaufen 3 als Laugehaufen in einer vertikalen Schnittzeichnung dargestellt. In diesem Fall werden im Zuge der schrittweisen Errichtung des Erzhaufens 3 zwei Induktionsschleifen 4 zeitlich nacheinander und somit in unterschiedlicher Höhe im Erdhaufen 3 verlegt. Die zugeführte kalte Lauge wird in Zonen 81 und 82 einer oberen Erzhaufen-Schicht erwärmt. Eine aktive Zone 83 einer unteren Erzhaufen-Schicht hat unterstützende Funktion, da durch diese Zone 83 vorgewärmte Laugelösung durchsickert. Durch individuelle Regelung des Stromes der Induktionsschleifen 4 wird die eingebrachte Leistung und damit das Erwärmen des Erzhaufens 3 effizient gesteuert. Die Temperatur im Erzhaufen 3 kann regelmäßig oder kontinuierlich gemessen werden. Dafür können beim oder nach dem Errichten des Haufens Temperaturmessgeräte bzw. -sensoren im Haufen angeordnet werden.

Die Aussentemperaturverhältnisse haben große Wirkung auf die die Effizienz und Kontinuierlichkeit des Haufenlaugens: In kalter Jahreszeit wird heutzutage an sich die Laugung eingestellt oder es werden aufwändige Maßnahmen zum Schutz der Laugelösung vor niedrigen Temperaturen getroffen. Als verbreitete Maßnahme ist der oberflächliche Schutz des Erzhaufens 3 (siehe Fig. 5) durch wärmeschützende thermisch isolierende Beläge 13, die auf der Oberfläche des Erzhaufens 3 verlegt werden, bekannt. Die Beläge 13 können z.B. aus hart werdendem Schaum gebildet sein.

Die Berieselungsrohre 6 werden in diesem Fall vorzugsweise unter den als Schutzschicht wirkenden Belägen 13 verlegt. Um die Erzlaugung zu unterstützen, werden gemäß der Erfindung zusätzlich in der Ansammlung - z.B. im Haufenkern - eine oder mehrere Induktionsschleifen 4 verlegt. Diese Induktionsschleife 4 kann vorwiegend in der kalten Jahreszeit an den Strom angeschaltet und betrieben werden. Da die Induktionsschleife 4 im Haufenkern verlegt ist, ist auch der Wärmeverlust gering. Die Zone 8 im zum Leiter benachbarten Erzhaufen-Bereich, der durch Wirbelströme erwärmt wird, erweitert sich durch konvektive und konduktive Wärmeübertragung und bildet eine Zone 14 mit erhöhter Temperatur, in der die Auslaugungsbedingungen optimal sind. Diese Zone 14 ist somit größer als der bloße Wirkungsbereich des elektromagnetischen Feldes in Zone 8.

Ein Leitungsabschnitt 2 weist beispielsweise einen Längsinduktivitätsbelag von 1,0 bis 2,7 µH/m (microhenry je Meter Länge) auf. Der Querkapazitätsbelag liegt beispielsweise bei 10 bis 100 pF/m (picofarad per Meter Länge). Die Wellengeschwindigkeit ist durch den Kapazitäts- und Induktivitätsbelag der Leiteranordnung gegeben. Die charakteristische Frequenz der Anordnung ist bedingt durch die Schleifenlänge und die Wellenausbreitungsgeschwindigkeit entlang der Anordnung der Induktionsschleife. Weitere Informationen zur Ausgestaltung von Leitern, die auch für vorliegenden Erfindungsgegenstand einsetzbar sind, findet sich unter DE 10 2004 009 896 A1 und WO 2009/027305 A2.

Das Haufenlaugen ist optimal für Einsatz des induktiven Erwärmens mittels einer Induktionsschleife 4, insbesondere wenn der Erzhaufen 3 gleichmäßig mit Laugelösung benetzt wird. Das Erzmaterial wird vorab optional durch mehrere technologische Schritte zum Auslaugen vorbereitet und der Erzhaufen ist nach seinen physikalischen Eigenschaften weitgehend homogen.

Zur gezielten Steigerung der Heizwirkung kann die elektrische Leitfähigkeit der Schicht 15 (siehe Fig. 6), in der die Induktionsschleife 4 platziert ist, erhöht werden. Dies kann beim Errichten des Erzhaufens 3 und/oder im Betreib, also beim Erzlaugen, erfolgen, und zwar durch Bildung einer Schicht 15 von Erzmaterial mit erhöhter Metallkonzentration in dieser Schicht. Die Steigerung der Heizwirkung kann auch durch Erhöhung der Permeabilität der Schicht 15 bewirkt werden, weil dadurch eine Schichtverwässerung gesteigert werden kann. Dies ist z.B. möglich durch Nutzung eines Erzmaterials mit reduziertem Tonanteil bei der Schichtbildung. Weiterhin kann die Heizwirkung gesteigert werden, wenn eine derartige Laugelösung eingesetzt wird, die ausgeprägte Elektrolyteigenschaften aufweist. Dies ist z.B. bei einer wässrigen Salzlösung gegeben.

Wenn die Schicht 15 eine erhöhte Leitfähigkeit hat, ist im Betrieb in der Schicht auch eine höhere Temperatur erreichbar. Die Erhöhung der Leitfähigkeit dient somit der Steigerung der induktiven Heizwirkung.

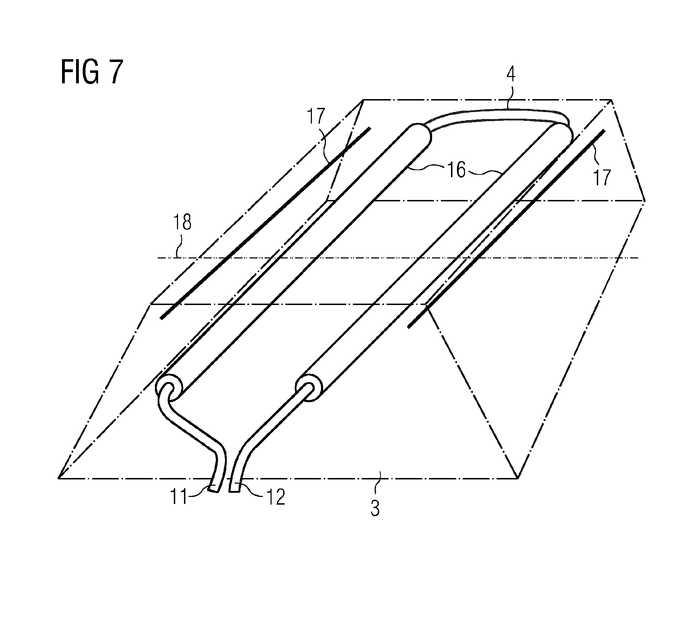

Um Beschädigung der Leitungen beim Errichten des Erzhaufens, bei Auslaugung des Erzes und beim Entfernen des ausgelaugten Erzmaterials auszuschließen, können beim Errichten des Erzhaufens nicht-metallische Rohre 16 parallel zueinander und parallel zu einer großen Achse der Tafelhalde verlegt werden. Dies wird in Fig. 7 in einer perspektivischen Ansicht verdeutlicht. Die Rohre 16 können auch parallel zur kleinen Achse 18 der Tafelhalde verlegt werden oder eine beliebige Ausrichtung aufweisen. Die Rohre 16 sind dabei dafür vorgesehen, dass zumindest ein Abschnitt eines Leiters durch ein jeweiliges Rohr 16 eingeführt werden kann und später auch wieder aus dem Rohr 16 entfernt werden kann.

Die Rohre 16 werden vorzugsweise aus nichtmetallischem Material - z.B. Polyethylen - gefertigt, so dass das Elektromagnetische Feld nicht durch das den Leiter umgebende Rohr 16 geschirmt wird und stattdessen sich im Erzhaufen 3 ausbildet. Nach dem Errichten des Erzhaufens 3 werden in die im Erzhaufen 3 installierten Rohre 16 die Teil-Leitungen 11, 12 mit Bildung der Induktionsschleife 4 verlegt. Der Eingang und Ausgang in die Rohre 16 kann abgedichtet werden, damit die aggressive Laugenlösung nicht in die Rohrleitungen eindringen kann. Die Rohre 16 können auch mit nichtleitfähigem Kühlmittel gefüllt sein.

Um eine Einflussnahme auf die Ausbreitung des elektromagnetischen Feldes in der Halde zu ermöglichen, können Metallteile 17 im Haufen abseits der Induktionsschleife 4 in den peripheren Kanten oder an den Strossen 10 verlegt werden. Die Metallteile 17 - Rohre, Metallgitter, Armaturen - bilden leitfähige Steuerelektroden, die das elektromagnetische Feld beeinflussen und somit steuern. Diese Metallteile 17 werden durch durch das Feld ausgelöste Wirbelströme erwärmt. Die Wärme wird daraufhin weiter an die die Metallteile 17 umgebende Laugelösung und an das direkt benachbarte Erzmaterial abgegeben.

Die Hin- und Rückführungen der elektrischen Leitungen 11 und 12 außerhalb des Haufens werden vorzugsweise so gestaltet, dass diese Leitungen 11 bzw. 12 der Induktionsschleife 4 dicht beieinander liegen. Damit wird erreicht, dass sich das elektrische Feld von Hin- und Rückleiter in diesem Bereich weitgehend kompensiert. Somit werden Verluste außerhalb der Ansammlung weitgehend vermieden.

Der Hochfrequenzgenerator 5 kann Leistungen bis zu mehreren Mega-Watt erzeugen, z. B. 1 MW, 2MW oder bis zu 10MW. Typischerweise werden Frequenzen zwischen 5 und 500 kHz verwendet, um bei den typisch vorhandenen elektrischen Leitfähigkeiten innerhalb des Erzhaufens 3 von bis zu 1 S (Siemens) die gewünschte Eindringtiefe des elektrischen Feldes gemäß den Maßen des Erzhaufens 3 zu erreichen.

Weiterhin ist es denkbar, höhere Frequenzen zu verwenden, sofern an bestimmten Stellen höhere spezifische Heizdichten erreicht werden sollen. Es ist denkbar, Kombinationen aus induktiven Heizen und anderen hochfrequenten Heizverfahren - z.B. Langwelle im MHz-Bereich oder Mikrowelle im GHz-Bereich - anzuwenden.

Gemäß den vorliegenden Ausführungsbeispielen kann beispielsweise polymetallisches Erz (Nickel(Ni)-Kobalt(Co)) in einem Tagebau abgebaut werden. Die bisher allgemeinen Grundsätze werden nun noch einmal an Hand dieses Beispiels spezifisch erläutert. Das Roherz wird in mehreren Stufen mit Einsatz konventioneller Technik gebrochen. Da das Roherz beispielsweise hochporös ist, kann eine zweistufige Zerkleinerung ausreichend sein. Damit erreicht das Erz eine Körnung von 25 mm bis 50 mm. Wenn das gebrochene Roherz einen großen Anteil an Kleinerz hat, kann das Erzgut zusätzlich agglomeriert werden. Das Stückigmachen wird z.B. unter Verwendung von Kugelmühlen erreicht. Nach dem Stückigmachen wird in dem Erzmaterial das Kleinerz (<1,7 mm) ausgesiebt. Es wird auf einer Freifläche eine Unterlage für das Haufenlaugen durch Betonieren/Asphaltieren des Bodens und Bildung einer permeablen Erzschicht, in der die Dränagerohre verlegt sind, errichtet. Danach wird mit Verwendung der konventionellen Transport - und Bergbautechnik ein tafelförmiger Erzhaufen errichtet, der die Höhe ca. 5-7 Meter, die Breite 10-20 Meter und die Länge 200-400 Meter hat. In der Höhe von ca. 3 Meter wird eine Strosse, die ca. 1 Meter breit ist, gebildet. Oberhalb des Laugehaufens wird eine Berieselungsanlage montiert. Als Lauge wird eine wässrige Lösung aus Schwefelsäure mit einer Konzentration von z. B. 20-200 g/L verwendet. Die durch den Erzhaufen durchgesickerte Lösung wird nach Konzentration der Metalle untersucht. Wenn die Metallkonzentration nicht ausreichend ist, wird die Lösung wiederholend durch die Berieselungsanlage geführt. Bei Beginn der kalten Jahreszeiten würde die Laugung normalerweise eingestellt. Durch die Anwendung des erfindungsgemäßen Verfahrens kann die Haufenlaugung jedoch ganzjährlich geführt werden. Wenn die Außentemperatur niedrig wird, wird in die vorgesehenen Leerrohre im Erzhaufen eine Induktionsschleife eingezogen. In der Nähe des Erzhaufens wird ein HF-Generator (HF: Hochfrequenz) aufgestellt. Nach dem Anschließen der Leitungsschleife an den HF-Generator, wird der Kern des Erzhaufens erwärmt, z.B. bis zu 30-95°C. Diese Temperatur ist regelbar, insbesondere durch Änderung der Stromstärke. Die optimale Temperatur ist für jedes Erz und jedes Laugemittel anders und wird insbesondere durch Laboruntersuchungen sowie durch Wirtschaftlichkeitsberechnungen bestimmt. Nach weitgehend vollständigem Auslaugen des Erzhaufens, das monatelang dauern kann, wird das ausgelaugte Erzmaterial als Abfall behandelt. Der Haufen wird mit Wasser "gewaschen" und im Tagebauraum oder Untertage deponiert. Auf seinem Platz kann anschließend ein neuer Erzhaufen errichtet werden.

Im Folgenden wird noch einmal auf die Induktionsschleife 4 eingegangen, der auch als elektrischer Leiter, Induktor, Leiter-Schleife, etc. bezeichnet werden kann.

Der elektrische Leiter ist als so genannter Induktor ausgebildet und wird im Betrieb mit Wechselspannung betrieben, so dass sich um den Leiter ein elektromagnetisches Wechselfeld aufbaut, welches wiederum - bedingt durch eine vorhandene elektrische Leitfähigkeit - in der Ansammlung Wirbelströme anregt, damit joulsche Wärme erzeugt wird. Die Erwärmung betrifft die Umgebung des Induktors, auf die das Feld des Induktors wirkt.

Der Leiter besteht vorzugsweise aus einer Abfolge von induktiv und kapazitiv wirkenden Elementen, welche einen Serienresonanzkreis bilden, der als Schleife ausbildet ist, dessen Enden an den Frequenzgenerator angeschlossen werden, welcher die Schleife bestromt.

Die elektrischen Zuleitungen (die Teil-Leitungen 11 und 12) können dabei ebenfalls als Induktor ausgebildet sein. Alternativ können die elektrischen Zuleitungen als ein Kabel mit wenigen Verlusten ausgebildet sein, das erst innerhalb der Ansammlung zu einem Induktor wird, der wiederum ein erhebliches elektromagnetisches Feld generiert.

Die Beschreibung der elektrotechnischen Parameter der induktiven Heizungsanlage auf Basis einer Induktionsschleife ist im Folgenden kurz erläutert:
Die Leiterschleife oder Induktionsschleife wirkt im Betrieb als Induktionsheizung, um zusatzliche Wärme in die Ansammlung einzubringen. Der aktive Bereich des Leiters lässt sich innerhalb der Ansammlung als eine geschlossene Schleife (also ein Oval, mit weitgehend parallelen Seiten) beschreiben. An den aktiven Bereich kann sich ein Endbereich (Zu-/Ableitungen) anschließen. Die Teile des Anfangs- und
Endbereiches des Leiters können elektrisch mit einer Stromquelle - einem Frequenzgenerator - kontaktiert sein. Es ist vorzugsweise vorgesehen, die Leitungsinduktivität des Leiters abschnittsweise durch diskret oder kontinuierlich ausgeführte Serienkapazitäten zu kompensieren. Dabei kann die Leitung mit integrierter Kompensation vorgesehen sein, so dass die Frequenz des Frequenzgenerators auf die Resonanzfrequenz der Stromschleife abgestimmt wird. Die Kapazität im Leiter kann von Zylinderkondensatoren zwischen einer rohrförmigen Außenelektrode eines ersten Kabel-Abschnitts und
einer rohrförmigen Innenelektrode eines zweiten Kabel-Abschnitts gebildet, zwischen denen sich ein Dielektrikum befindet. Ganz entsprechend wird der benachbarte Kondensator zwischen den folgenden Kabel-Abschnitten gebildet. Das Dielektrikum des Kondensators wird dabei so gewählt, dass es eine hohen Spannungsfestigkeit und eine hohe Temperaturbeständigkeit erfüllt.

Weiterhin ist denkbar, eine Ineinanderschachtelung mehrerer koaxialer Elektroden vorzusehen. Auch andere übliche Kondensatorbauformen können in die Leitung integriert werden.

Des Weiteren kann die gesamte Elektrode (also der Leiterabschnitt 2 oder die gesamte Induktionsschleife 4) bereits von einer Isolation umgeben sein. Die Isolierung gegen die Umgebung ist vorteilhaft, um resistive Ströme durch die Umgebung zwischen den benachbarten Kabel-Abschnitten insbesondere im Bereich der Kondensatoren zu verhindern. Die Isolation verhindert weiterhin einen resistiven Stromfluss zwischen Hin- und Rückleiter.

Mehrere rohrförmige Elektroden können parallel geschaltet werden. Vorteilhafterweise kann die Parallelschaltung der Kondensatoren zur Erhöhung der Kapazität oder zur Erhöhung ihrer Spannungsfestigkeit genutzt werden.

Weiterhin kann eine Kompensation der Längsinduktivität mittels vorwiegend konzentrierter Querkapazitäten erfolgen: Anstelle mehr oder weniger kurzer Kondensatoren als konzentrierte Elemente in die Leitung einzubringen, kann auch der Kapazitätsbelag - den eine Zweidrahtleitung wie z. B. eine Koaxialleitung oder Mehrdrahtleitungen ohnehin über ihre gesamt Länge bereitstellen - zur Kompensation der Längsinduktivitäten verwendet werden. Dazu wird in gleichen Abständen abwechselnd der Innen- und Außenleiter unterbrochen und so der Stromfluss über die verteilten Querkapazitäten erzwungen.

Die konstruktive Ausgestaltung der Leiterschleife kann als Kabelbauform oder als Massivleiterbauform erfolgen. Die Bauform ist jedoch unerheblich für die zuvor beschriebene elektrische Funktionsweise.

Ein Frequenzgenerator zum Ansteuern des elektrischen Leiters ist vorzugsweise als Hochfrequenzgenerator ausgebildet. Der Frequenzgenerator kann dreiphasig aufgebaut sein und vorteilhafterweise eine transformatorische Kopplung und Leistungshalbleiter als Bauelemente beinhalten. Insbesondere kann die Schaltung einen Spannung einprägenden Wechselrichter beinhalten. Bei einem solchen Generator kann für den bestimmungsgemäßen Gebrauch ein Betrieb unter Resonanzbedingungen erforderlich sein, um eine Blindleistungskompensation zu erreichen. Gegebenenfalls ist die Ansteuerfrequenz im Betrieb geeignet nachzustellen.

Zur Ansteuerung des Leiters können folgende Komponenten vorhanden sein: Ausgehend von der 3phasigen Netzwechselspannungsquelle z. B. 50Hz oder 60 Hz, wird beispielsweise ein dreiphasiger Gleichrichter angesteuert, dem über einen Zwischenkreis mit Kondensator ein dreiphasiger Wechselrichter nachgeschaltet ist, der periodische Rechtecksignale geeigneter Frequenz generiert. Über ein Anpassnetzwerk aus Induktivitäten und Kondensatoren werden Induktoren als Ausgang angesteuert. Ein Verzicht auf das Anpassnetzwerk ist allerdings möglich, wenn der Induktor als Induktionsschleife ausgebildet ist, welche aufgrund ihrer Induktivität und des kapazitiven Belages das Einstellen der erforderlichen Resonanzfrequenz ermöglicht.

Die beschriebenen Frequenzgeneratoren lassen sich grundsätzlich als spannungseinprägende Stromrichter oder entsprechend als stromeinprägenden Stromrichter einsetzen.

Das Design der elektrischen Anordnung wählt man vorzugsweise so, dass die Eindringtiefe des elektromagnetischen Feldes typischerweise dem halben Abstand der horizontal ausgebildeten Induktorleiter entspricht. Damit wird erreicht, dass sich das elektromagnetische Feld eines Hin- und Rückleiters des Leiters nicht kompensiert und auf der anderen Seite die Anzahl an Induktionsschleifen im Verhältnis zur Größe der Ansammlung optimal gering gehalten werden kann.

Zusammenfassend ist zu erwähnen, dass die Ausgestaltungen der Erfindung eine Steigerung des Ausbringens der Metalle bei Haufenlaugung, eine Zeitreduzierung der Haufensauslaugung, eine Reduktion des Laugeverbrauchens in Verhältnis zur Ausbeute und/oder eine Optimierung des Energieeinsatzes im Verhältnis zur Ausbeute ermöglicht.

Dies wird insbesondere durch folgende Prinzipien erreicht, indem:
- in dem Erzhaufen oder Halde oder auf der Oberfläche des Haufens oder Halde die Leitungen mit Bildung der Induktionsschleife/ Induktionsschleifen (Induktor) verlegt wird;
- die Leitungen für induktives Beheizen des Erzmaterials gleichzeitig mit dem Errichten des Erzhaufens oder Halde verlegt werden;
- die Leitungen mit Bildung der induktiven Schleife(n) (Induktor) vorwiegend in der oberen Schicht des Erzhaufens oder Halde verlegt werden;
- die Leitungen mit Bildung der induktiven Schleife(n) (Induktor) auf der Kante des Erzhaufens oder der Tafelhalde frei verlegt werden, wobei die induktive Schleife in der Fläche, die parallel der Haufenbasis ist, platziert wird;
- den Erzhaufen oder die Tafelhalde strossenförmig gebildet wird und die Leitungen, die die induktive Schleife bilden, frei auf den Strossen platziert werden;
- wenigstens ein Abschnitt der Induktionsschleife auf der Strosse platziert wird und ein anderer Abschnitt der Induktionsschleife im Erzmaterial der Halde oder des Haufens platziert wird;
- die Induktionsschleifen vorwiegend in den vertikalen Flächen platziert werden, wobei die rückführende oder zuführende Leitung der Induktionsschleife in der Basisschicht des Erzhaufens oder der Halde verlegt wird;
- die rückführende oder zuführende Leitung der Induktionsschleife auf der quasihorizontalen Oberfläche der Tafelhalde verlegt wird;
- die Induktionsschleifen vorwiegend in den horizontalen Flächen oder in Flächen, die parallel der Basis der Halde oder des Erzhaufens liegen, verlegt werden;
- die Induktionsschleifen mindestens in zwei parallelen Ebenen platziert werden;
- vorwiegend der Erzhaufenkern oder der Haldenkern erhitzt wird;
- die Halden- oder Haufenoberfläche teilweise oder vollständig mit einem wärmedämmenden Material bedeckt wird;
- beim Errichten eines Erzhaufen oder von einer Halde im Haufen oder in der Halde nicht metallische Rohre platziert werden und die elektrische Leitung nach dem Errichten von einem Erzhaufen oder einer Halde in diese Rohre mit Bildung mindestens einer Induktionsschleife eingezogen wird; das Einziehen nichtmetallischer Rohre ermöglicht die spätere Wiederverwendung der Induktionsleitung in der nächsten Halde, weil damit das Heraus-oder Hineinziehen der Induktionsleitung ermöglicht wird;
- den Erzhaufen oder die Halde wenigstens mit einer Erzschicht, die erhöhte elektrische Leitfähigkeit hat, errichtet und die Induktionsschleife/Induktionsschleifen in dieser Schicht platziert wird;
- die induktive Heizung nur bei Senkung der Umgebungstemperaturen einschaltet wird;
- die Halde oder Erzhaufen während des induktiven Erhitzens mit Elektrolytlösungen berieselt wird;
- die Halde mit mikrobakterieller Nährsalzlösung berieselt wird;
- metallische Steuerungselemente einsetzt werden, die eine gezielte Führung des elektromagnetischen Feldes bewirken und so die Wirksamkeit der elektromagnetischen Heizung gezielt beeinflussen.

## Patentansprüche

1. Anordnung zum Eintragen von Wärme in eine Ansammlung (3) von gebrochenen Erzen und/oder von metallischen Sanden zur Gewinnung von in der Ansammlung (3) enthaltenen Wertstoffen, wobei
- eine Einrichtung (6) zur Benetzung der Ansammlung (3) mit einer, insbesondere mit einer Elektrolytlösung angereicherten, Flüssigkeit zur Auslaugung der enthaltenen Wertstoffe vorgesehen ist,
- ein elektrischer Leiter (4) zumindest teilweise von der Ansammlung (3) umgeben oder in Bezug auf die Ansammlung (3) örtlich benachbart angeordnet ist, und
- der Leiter (4) zumindest einen Leiter-Abschnitt (2) aufweist, der derart ausgebildet ist, dass im Betrieb ein elektromagnetisches Feld auf den zum Leiter-Abschnitt (2) benachbarten Bereich (8) der Ansammlung (3) mittels elektromagnetischer Induktion einwirkt, so dass in diesem Bereich (8) metallische Verbindungen und/oder Elektrolyte angeregt werden und dadurch eine Temperaturerhöhung im benachbarten Bereich (8) der Ansammlung (3) bewirkt wird.

2. Anordnung nach Anspruch 1,
**dadurch gekennzeichnet,**
**dass** der Leiter (4) mit Wechselstrom mit einer derartigen Frequenz bestromt wird, dass
der Leiter (4) einen maximalen Strom entsprechend seiner konstruierten nominalen Stromtragfähigkeit erreicht.

3. Anordnung nach einem der vorhergehenden Ansprüche,
**dadurch gekennzeichnet,**
**dass** zur Steuerung des elektromagnetisches Feldes elektrisch leitfähige Steuerelektroden (17) auf oder an oder in der Ansammlung (3) verlegt werden, um eine Streuung des elektromagnetischen Feldes zu steuern, insbesondere um die Streuung des elektromagnetischen Feldes außerhalb der Ansammlung (3) einzuschränken.

4. Anordnung nach einem der vorhergehenden Ansprüche,
**dadurch gekennzeichnet,**
**dass** der Leiter (4) seriell kompensiert ausgebildet ist.

5. Anordnung nach einem der vorhergehenden Ansprüche,
**dadurch gekennzeichnet,**
**dass** ein erster Teil des Leiter-Abschnitts (2) weitgehend parallel zu einem zweiten Teil des Leiter-Abschnitts (2) ausgerichtet ist, wobei
- der erste Teil und der zweite Teil außerhalb der Ansammlung (3) zu einer Leiterschleife verbunden sind, und/oder
- der erste Teil und der zweite Teil weitgehend parallel zu einer Erstreckungsachse der Ansammlung (3) angeordnet sind.

6. Anordnung nach einem der vorhergehenden Ansprüche,
**dadurch gekennzeichnet,**
**dass** als den Leiter (4) erregende Frequenzquelle ein an den Leiter (4) angeschlossener, insbesondere im Leistungsbereich 10kW bis 10 MW betriebener, Frequenzumrichter (5) verwendet wird und der Frequenzumrichter (5) einen Reihenresonanzschwingkreis oder einen Parallelresonanzschwingkreis mit dem Leiter (4) bildet.

7. Anordnung nach einem der vorhergehenden Ansprüche,
**dadurch gekennzeichnet,**
**dass** der Leiter (4) in dem zumindest einen Leiter-Abschnitt (2) in nichtmetallische Rohre (16) verlegt ist, insbesondere aus
- Polyethylen, und/oder
- Hochtemperatur-Polyethylen, und/oder
- Polyvynilchlorid, und/oder
- Glasfaser verstärktem Kunststoff, vorzugsweise aus Glasfaser verstärkter Kunststoff in Verbindung mit Epoxidharz.

8. Anordnung nach einem der vorhergehenden Ansprüche,
**dadurch gekennzeichnet,**
**dass** mindestens eine Drainageleitung (20) am Grund der Ansammlung (3) vorgesehen ist und eine geschlitzte Mantelfläche für die Aufnahme eines Flüssigkeitsgemisches aufweist, wobei die Drainageleitung (20) nichtmetallisch ausgeführt ist, und/oder
ein Grund der Ansammlung (3) eine zu einem Rand der Ansammlung (3) geneigte Sohle aufweist.

9. Verfahren zum Errichten einer Anordnung gemäß einem der vorhergehenden Ansprüche zum Eintragen von Wärme in eine Ansammlung (3) von gebrochenen Erzen und/oder von metallischen Sanden zur Gewinnung von in der Ansammlung (3) enthaltenen Wertstoffen, umfassend folgender Verfahrensschritte:
- Bilden einer Ansammlung (3) von gebrochenen Erzen und/oder von metallischen Sanden;
- Bereitstellen einer Einrichtung (6) zum Benetzen der Ansammlung (3) mit einer, insbesondere mit einer Elektrolytlösung angereicherten, Flüssigkeit zur Auslaugung der enthaltenen Wertstoffe;
- Installieren eines elektrischen Leiters (4) in der Ansammlung (3) oder benachbart zur Ansammlung (3) während des Bildens oder zeitlich nach dem Bilden der Ansammlung (3), so dass der Leiter (4) zumindest teilweise von der Ansammlung (3) umgeben oder in Bezug auf die Ansammlung (3) örtlich benachbart angeordnet ist, wobei der Leiter (4) zumindest einen Leiter-Abschnitt (2) aufweist, der derart ausgebildet ist, dass im Betrieb ein elektromagnetisches Feld auf den zum Leiter-Abschnitt (2) benachbarten Bereich (8) der Ansammlung (3) mittels elektromagnetischer Induktion einwirkt, so dass in diesem Bereich (8) metallische Verbindungen und/oder Elektrolyte angeregt werden und dadurch eine Temperaturerhöhung im benachbarten Bereich (8) der Ansammlung (3) bewirkt wird.

10. Verfahren nach Anspruch 9,
**dadurch gekennzeichnet,**
**dass** im Rahmen des Installierens des elektrischen Leiters (4) in der Ansammlung (3) ein Teil des Leiter-Abschnitts (2)
- vorwiegend in der oberen Schicht der Ansammlung (3) verlegt wird, oder
- weitgehend parallel zu einem weiteren Teil des Leiter-Abschnitts (2) ausgerichtet wird, wobei die beiden Teile vertikal angeordnet sind, oder
- weitgehend parallel zu einem weiteren Teil des Leiter-Abschnitts (2) ausgerichtet wird, wobei die beiden Teile horizontal angeordnet sind, oder
- weitgehend parallel zu einem weiteren Teil des Leiter-Abschnitts (2) ausgerichtet wird, wobei die beiden Teile wiederum parallel zu einer Sohle der Ansammlung (3) angeordnet sind;
und/oder
**dass** im Rahmen des Installierens des elektrischen Leiters (4) benachbart zur Ansammlung (3) ein Teil des Leiter-Abschnitts (2)
- auf einer Kante des Ansammlung (3) oberflächlich verlegt wird, wobei insbesondere der Leiter-Abschnitt (2) parallel zu einer Sohle der Ansammlung (3) ausgerichtet wird, oder
- auf einer Strosse (10) einer strossenförmig gebildeten Ansammlung (3) oberflächlich verlegt wird, oder
- in an einer Oberfläche der Ansammlung (3) geformte Rinnen verlegt wird.

11. Verfahren nach einem der Ansprüche 9 bis 10,
**dadurch gekennzeichnet,**
**dass** beim Bilden der Ansammlung (3) in der Ansammlung (3) mindestens ein Rohr (16) platziert wird und dass das Installieren des elektrischen Leiters (4) mittels Einführen des Leiters (4) in das Rohr (16) erfolgt, oder dass das Installieren des elektrischen Leiters (4) nach dem Bilden der Ansammlung (3) erfolgt, indem ein Rohr (16) durch Bohren durch die Ansammlung (3) mittels einem Bohrgestänge und anschließendem Einziehen des Rohrs (16) beim Herausziehen des Bohrgestänges in der Ansammlung (3) platziert wird.

12. Betriebsverfahren zum Eintragen von Wärme in eine Ansammlung (3) von gebrochenen Erzen und/oder von metallischen Sanden zur Gewinnung von in der Ansammlung (3) enthaltenen Wertstoffen, umfassend folgender Verfahrensschritte:
- Bilden einer Ansammlung (3) von gebrochenen Erzen und/oder von metallischen Sanden;
- Benetzen der Ansammlung (3) mit einer, insbesondere mit einer Elektrolytlösung angereicherten, Flüssigkeit zur Auslaugung der enthaltenen Wertstoffen;
- Betreiben eines mindestens einen Leiter-Abschnitt (2) aufweisenden elektrischen Leiters (4) in der Ansammlung (3) oder benachbart zur Ansammlung (3), so dass im Betrieb ein elektromagnetisches Feld auf den zum Leiter-Abschnitt (2) benachbarten Bereich (8) der Ansammlung (3) mittels elektromagnetischer Induktion einwirkt, so dass in diesem Bereich (8) metallische Verbindungen und/oder Elektrolyte angeregt werden und dadurch eine Temperaturerhöhung im benachbarten Bereich (8) der Ansammlung (3) bewirkt wird.

13. Betriebsverfahren nach Anspruch 12,
**dadurch gekennzeichnet,**
**dass** der Leiter (4) mit Wechselstrom mit einer derartigen Frequenz bestromt wird, dass sich für das elektromagnetische Feld eine Frequenz im Bereich von
- 1khz bis 500kHz oder
- 500kHz bis 300MHz oder
- 300MHz bis 3000MHz
einstellt.

14. Betriebsverfahren nach einem der Ansprüche 12 oder 13, **dadurch gekennzeichnet,**
**dass** die Flüssigkeit derart für das Benetzen bereitgestellt wird, dass eine Zusammensetzung der Flüssigkeit in einem eine elektrische Leitfähigkeit der Benetzungsflüssigkeit beeinflussenden konfigurierbaren Mengenverhältnis erfolgt und/oder die Flüssigkeit in einer konfigurierbaren Menge bereitgestellt wird,
und/oder dass der elektrische Leiter (4) derart angesteuert wird, dass eine Betriebsfrequenz und/oder eine Betriebsstromstärke des Leiters (4) konfigurierbar ist, wobei diese Konfiguration durch ein Kontrollsystem erfolgt, so dass ein Temperatureintrag in die Ansammlung (3) maximiert oder an einen Zielwert angenähert wird und/oder so dass eine gemessene Temperatur in der Ansammlung (3) mittels Regelung innerhalb eines vorgegebenen Temperaturbandes gehalten wird oder an eine Zieltemperatur angenähert wird.

15. Betriebsverfahren nach einem der Ansprüche 12 bis 14, **dadurch gekennzeichnet,**
**dass** der Flüssigkeit vor dem Benetzen eine mikrobakterielle Nährlösung hinzugegeben wird.
